(19) Europäisches Patentamt / European Patent Office / Office européen des brevets

(11) **EP 4 538 306 A1**

(12) **EUROPEAN PATENT APPLICATION**

(43) Date of publication:
**16.04.2025 Bulletin 2025/16**

(21) Application number: **23202949.6**

(22) Date of filing: **11.10.2023**

(51) International Patent Classification (IPC):
***C08F 210/16*** *(2006.01)*

(52) Cooperative Patent Classification (CPC):
(C-Sets available)
**C08F 210/06; C08L 23/12;** C08K 2201/003; C08L 2205/24; C08L 2314/02 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
- **WANG, Jingbo**
  **4021 Linz (AT)**
- **GAHLEITNER, Markus**
  **4021 Linz (AT)**
- **MOLNAR, Janos**
  **4021 Linz (AT)**

(74) Representative: **TBK**
**Bavariaring 4-6**
**80336 München (DE)**

(54) **DUAL NUCLEATION FOR HIGH-FLOW IMPACT COPOLYMERS**

(57) The present invention relates to a high-flow ethylene-propylene copolymer composition having improved balance of properties in regard of mechanical and impact properties. The ethylene-propylene copolymer composition has a melt flow rate MFR of more than 10 g/10 min and contains (A) 97.00-99.45 wt.-% of an ethylene-propylene impact copolymer, (B) 0.05-0.50 wt.-% of an α-nucleating agent of formula (I) of the description and (C) 0.50-2.00 wt.-% of a mineral α-nucleating agent having a median particle size of 10 μm or less. The impact copolymer comprises a1) 75-88 wt.-% of a crystalline polypropylene homopolymer fraction (CF) having an intrinsic viscosity in the range of 0.7 to 2.6 dl/g, and a2) 12-25 wt.-% of an amorphous ethylene-propylene copolymer fraction (SF) having an intrinsic viscosity in the range of 1.5 to 4.5 dl/g and an ethylene content in the range of 25.0 to 55.0 wt.-%.

**FIG. 1**

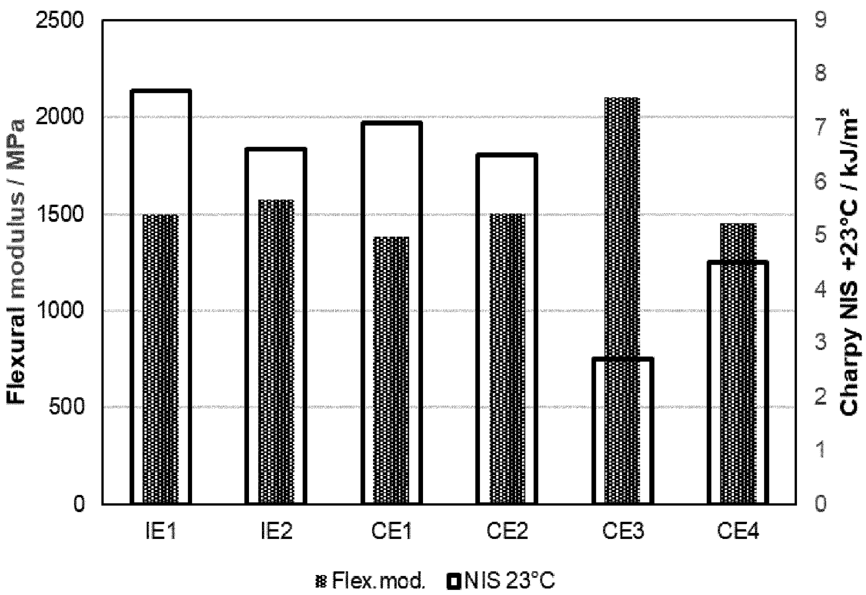


EP 4 538 306 A1

(52) Cooperative Patent Classification (CPC): (Cont.)

C-Sets
**C08F 210/06, C08F 2/001;**
**C08F 210/06, C08F 4/6465;**
**C08F 210/06, C08F 4/6492;**
**C08F 210/06, C08F 4/651;**
**C08F 210/06, C08F 4/6546;**
**C08L 23/12, C08L 23/16, C08K 5/0083,**
**C08K 3/013;**
**C08L 23/12, C08L 23/16, C08K 5/098, C08K 3/34;**
C08F 110/06, C08F 2500/12, C08F 2500/35;
C08F 210/06, C08F 210/16, C08F 2500/12,
C08F 2500/35, C08F 2500/27, C08F 2500/17

## Description

### Field of the invention

The present invention relates to a high-flow ethylene-propylene copolymer composition having improved balance of properties in regard of mechanical and impact properties. The invention furthermore relates to uses of this composition.

### Technical background

Heterophasic ethylene-propylene copolymers (also referred to as ethylene-propylene impact copolymers, or simply heterophasic copolymers HECO) are widely used in the packaging industry due to their excellent combination of stiffness and impact behavior. One can find the application of heterophasic copolymers in many aspects of daily life. One of the main application areas of such copolymers is to be found in injection molding of thin-wall articles. Typical examples include plastics cups, pails and small containers mainly intended for food and non-food packaging. In order to be suitable for thin-wall injection molding application, the polypropylene should demonstrate excellent processability/flowability, normally expressed by high melt flow rate (MFR), i.e. low average molecular weight. Still, there is the desire within the polymer and packaging industry to improve the available heterophasic copolymer compositions with high melt flow rates (MFR) in view of mechanical properties and especially the amount of impurities.

However, with existing technology, there are several limitations.

Thus, there is a need in the art for ethylene-propylene copolymer compositions with a high melt flow rate MFR of more than 10 g/10 min suitable for injection molding and the production of thin-wall articles, which show an improved balance of properties in regard of mechanical properties and impact properties exemplified in high flexural modulus and impact strength, a high processability exemplified in a high melt flow rate.

### Summary of the invention

It has surprisingly been found that the interaction of a specific ethylene-propylene impact copolymer having 75-88 wt.-% of a crystalline fraction (CF) and 12-25 wt.-% of an amorphous fraction (SF, sometimes also referred to as soluble fraction) with a combination of two specific $\alpha$-nucleating agents results in superior balance between mechanical properties, impact properties and processability.

The present invention relates to an ethylene-propylene copolymer composition comprising 97.00-99.45 wt.-% (relative to 100% of the ethylene-propylene copolymer composition) of an ethylene-propylene impact copolymer, said ethylene-propylene impact copolymer comprising 75-88 wt.-% of a crystalline polypropylene homopolymer fraction (CF) and 12-25 wt.-% of an amorphous ethylene-propylene copolymer fraction (SF), both determined according to CRYSTEX QC analysis, 0.05-0.50 wt.-% of an $\alpha$-nucleating agent selected from the group consisting of salts of formula (I) below and 0.50-2.00 wt.-% of a mineral $\alpha$-nucleating agent having a median particle size (D50, measured according to ISO 13317-3, Sedigraph method) of 10 $\mu$m or less. The composition has a melt flow rate (MFR2 according to ISO 1133 at 230°C and 2.16 kg load) of more than 10 g/10 min. The crystalline fraction (CF) has an intrinsic viscosity $IV_{CF}$ (according to ISO 1628/1, measured in Decalin at 135 °C) in the range of 0.7 to 2.6 dl/g. The amorphous fraction (SF) has an intrinsic viscosity $IV_{SF}$ (according to ISO 1628/1, measured in Decalin at 135 °C) in the range of 1.5 to 4.5 dl/g and an ethylene content $C2_{SF}$ (as determined by FT-IR spectroscopy calibrated by quantitative $^{13}$C-NMR spectroscopy) in the range of 25.0 to 55.0 wt.-%.

Formula (I): $\mathbf{Ra_n\ M_m\ X_o}$

In formula (I), M is independently a metal cation, X is independently an anion, and Ra is independently an organic anion of the following formula (II):

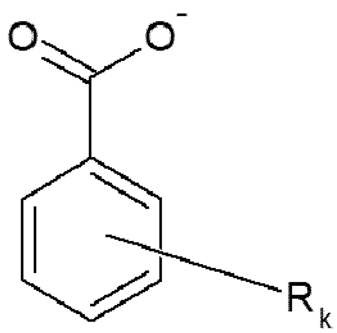

Formula (II)

In formula (II), R is independently an aliphatic hydrocarbon group, k is independently in the range of 1 to 3, n is in the range of 1 to 4, m is 1 or 2, and o is selected so that the total charge of the salt of formula (I) is 0.

The inventors surprisingly found that the synergistic interaction of two specific α nucleating agents as defined above with a specific impact copolymer as defined above results in superior properties, in particular in favorable balance between processability, mechanical properties and impact properties.

Further, the present invention relates to molded product comprising the composition of the present invention and to a use of the composition of the invention for preparing a molded product.

## Definitions

In the following amounts are given in % by weight (wt.-%) unless it is stated otherwise.

The term "comprising" (as well as terms "containing", "including" or "having") as used in the present invention does not exclude other components. For the purposes of the present invention, the term "consisting of" is considered to be a preferred embodiment of the term "comprising" (as well as terms "containing", "including" or "having) unless specifically defined otherwise. Likewise, if hereinafter a group is defined to comprise at least a certain number of embodiments, this is also to be understood to disclose a group, which preferably consists only of these embodiments, unless specifically defined otherwise. Unless explicitly described otherwise, the description of the present invention is to be understood so that one or more of any of the described preferred embodiments of the invention can be combined with the invention described in its most general features and/or with features (or sub-features) if other embodiments.

Further, where an indefinite or definite article is used when referring to a singular noun, e.g. "a", "an" or "the", this includes a plural of that noun unless something else is specifically stated.

## Detailed description of the invention

### Ethylene-propylene copolymer composition

The present invention relates to an ethylene-propylene copolymer composition. The ethylene-propylene copolymer composition has a melt flow rate MFR (also referred to as MFR2, measured at 230°C, 2.16 kg, ISO 1133) of more than 10 g/10 min. The ethylene-propylene copolymer composition contains (A) 97.00-99.45 wt.-% of an ethylene-propylene impact copolymer, (B) 0.05-0.50 wt.-% of an α-nucleating agent selected from the group consisting of salts of formula (I) below and (C) 0.50-2.00 wt.-% of a mineral α-nucleating agent having a median particle size of 10 μm or less. Percentages are given relative to 100 wt.-% of the composition as a whole. The composition may contain other components within the above constraints and preferably consists of the components (A), (B) and (C) as well as optional additives (i.e. additives may be present or may be absent).

The ethylene-propylene impact copolymer comprises a1) a crystalline fraction (CF) and a1) an amorphous fraction (SF). The crystalline fraction (CF) and the amorphous fraction (SF) can be characterized by CRYSTEX QC analysis. In the CRYSTEX QC analysis, a crystalline fraction (CF) and an amorphous (soluble) fraction (SF) are obtained, which can be quantified and analyzed in regard of the monomer and comonomer content as well as the intrinsic viscosity (IV). The ethylene-propylene impact copolymer is a heterophasic copolymer, and is preferably a Ziegler-Natta catalyzed heterophasic copolymer. Heterophasic propylene copolymers typically comprise:

a) a crystalline propylene homopolymer or copolymer matrix (M); and
b) an elastomeric rubber, preferably a propylene-ethylene elastomer (E).

In case of a random-heterophasic propylene copolymer, said crystalline matrix phase is a random copolymer of propylene and at least one alpha-olefin comonomer. The elastomeric phase can be a propylene copolymer with a high

amount of comonomer that is not randomly distributed in the polymer chain but is distributed in a comonomer-rich block structure and a propylene-rich block structure. A heterophasic polypropylene usually differentiates from a one-phasic propylene copolymer in that it shows at least two distinct glass transition temperatures $T_g$ which are attributed to the matrix phase and the elastomeric phase.

Specifically, the ethylene-propylene impact copolymer is preferably a heterogeneous copolymer polymerized using a heterogeneous Ziegler-Natta type catalyst system. Distinction between Ziegler-Natta catalyzed copolymer and single-site catalyzed copolymer is known in the art and can be based e.g. on analysis of catalyst residues in the copolymer and/or comonomer distribution. For example, the absence of 2,1-regiodefects is a key indicator that a propylene polymer has been polymerized in the presence of a Ziegler-Natta catalyst. Consequently, it is preferred that a Ziegler-Natta catalyzed (polypropylene) (co)polymer or (co)polymer fraction be essentially free (less than 0.10 mol%, preferably 0.05 mol% or less, even more preferably 0.02 mol% or less) from 2,1-regiodefects as determined by $^{13}$C-NMR spectroscopy. The crystalline fraction (CF) has an intrinsic viscosity $IV_{CF}$ in the range of 0.7 to 2.6 dl/g. The amorphous fraction (SF) has an intrinsic viscosity $IV_{SF}$ in the range of 1.5 to 4.5 dl/g and an ethylene content $C2_{SF}$ in the range of 25.0 to 55.0 wt.-%.

Within the restraints of the independent claim, the composition preferably further comprises up to 2.45 wt.-%, more preferably 0.01 to 2.45 wt.-%, additive(s). Any commonly known additives may be employed. Additives may be added as an isolated substance (raw material) or may be added in the form of a pre-mixture commonly called masterbatch, in which case the additives may also include a minor amount of isotactic polypropylene homopolymer. Said amount will not exceed 2.00 wt.-% and will normally be in the range of 0.00 to 1.50 wt.-%. Preferable additives are selected from the group consisting of antioxidants, UV-stabilizers, antistatic agents, acid scavengers, and slip agents. More preferably, no further nucleating agents shall be present. Preferably, at least antioxidant(s) is (are) present as additive(s).

The composition preferably has a Mechanical Performance Parameter MPP1 (NIS23*FM), defined as the product of NIS23 (Charpy notched impact strength according to ISO 179 1eA at 23°C) [kJ/m$^2$] and Flexural modulus (according to ISO 178) [MPa], of 9900 or more, more preferably in the range of from 10000 to 16000 ([MPa*kJ/m$^2$]).

The composition preferably has a Mechanical Performance Parameter MPP2 (NIS23*FM/MD-Shrinkage), defined as the product of NIS23 [kJ/m$^2$] and Flexural modulus [MPa] divided by MD Shrinkage (Shrinkage in the machine direction; as defined below) [%], in the range of from 6500 to 12000, more preferably 6700 to 10000.

The composition preferably has an MFR in the range of 11 to 100 g/10min, more preferably in the range of 12 to 90 g/10min.

The composition preferably has a crystallization temperature Tc (determined based on differential scanning calorimetry, DSC, according to ISO 11357) in the range of from 125 to 135°C, more preferably 128 to 132°C.

The composition preferably has a Flexural modulus (according to ISO 178) in the range of 1400 to 1750 MPa, more preferably 1450 to 1700 MPa.

The composition preferably has a NIS23 (Charpy notched impact strength according to ISO 179 1eA at 23°C) of 5.5 kJ/m$^2$ or more, more preferably in the range of 6.0 to 15.0 kJ/m$^2$, like 6.5 to 12.5 kJ/m$^2$.

The composition preferably has a NIS-20°C (Charpy notched impact strength according to ISO 179 1eA at -20°C) of 2.5 kJ/m$^2$ or more, more preferably in the range of 2.8 to 7.0 kJ/m$^2$, like 2.9 to 6.5 kJ/m$^2$.

The composition preferably has a heat distortion temperature (HDT; according to ISO 75 B, low load, measured on 80×10×4 mm$^3$ specimens) in the range of 95 to 115°C, more preferably 97 to 112°C, like 98 to 110°C.

The composition preferably has a shrinkage in the machine direction (MD shrinkage; measured as defined below) of 1.75% or less, preferably in the range of 0.90% to 1.70%.

**Ethylene-propylene impact copolymer**

Next, the ethylene-propylene impact copolymer contained in the composition of the invention will be described.

The ethylene-propylene impact copolymer comprises 75-88 wt.-% of the crystalline polypropylene homopolymer fraction (CF) and 12-25 wt.-% of the amorphous ethylene-propylene copolymer fraction (SF). The crystalline fraction (CF) has an intrinsic viscosity $IV_{CF}$ in the range of 0.7 to 2.6 dl/g. The amorphous fraction (SF) has an intrinsic viscosity $IV_S$ in the range of 1.5 to 4.5 dl/g and an ethylene content $C2_{SF}$ in the range of 25.0 to 55.0 wt.-%. Such an impact copolymer has been shown to achieve favorable interaction with a nucleation system as defined in the claims.

Preferably, the ethylene-propylene impact copolymer comprises 77 - 86 wt.-%, of the crystalline polypropylene homopolymer fraction (CF) and 14 - 23 wt.-% of the amorphous ethylene-propylene copolymer fraction (SF). The ethylene-propylene impact copolymer more preferably comprises 79 - 85 wt.-% of the crystalline polypropylene homopolymer fraction (CF) and 15 - 21 wt.-% of the amorphous ethylene-propylene copolymer fraction (SF).

The ethylene-propylene impact copolymer preferably has a xylene cold soluble content (XCS at 25 °C according to ISO 16152) in the range of from 12 to 30 wt.-%, more preferably of 14 to 25 wt.-%, like 15 to 22 wt.-%.

The ethylene-propylene impact copolymer preferably has a total C2 content ($C2_{EP}$) as determined by FT-IR spectroscopy calibrated by quantitative $^{13}$C-NMR spectroscopy in the range of from 4.2 to 11.2 wt.-%, preferably 5.0 to 10.5 wt.-%, like 5.5 to 10.0 wt.-%.

The ethylene-propylene impact copolymer preferably has a C2 content in the xylene cold soluble fraction C2-XCS as determined by FT-IR spectroscopy calibrated by quantitative $^{13}C$-NMR spectroscopy in the range of from 30 to 50 wt.-%, more preferably 32 to 47 wt.-%, like 35 to 45 wt.-%.

The ethylene-propylene impact copolymer preferably has an intrinsic viscosity $IV_{EP}$ in the range of from 0.8 to 3.0 dl/g, more preferably 1.0 to 2.8 dl/g, like 1.2 to 2.6 dl/g.

The ethylene-propylene impact copolymer preferably has an MFR (according to ISO 1133 at 230°C and 2.16 kg load) of more than 10 g/10 min, more preferably in the range of from 11 to 100 g/10min, preferably in the range of 12 to 90 g/10min.

The ethylene-propylene impact copolymer preferably has a melting temperature Tm (determined based on differential scanning calorimetry, DSC, according to ISO 11357) in the range of from 160 to 170°C, preferably of from 162 to 168°C.

The crystalline polypropylene homopolymer fraction (CF) of the ethylene-propylene impact copolymer preferably has an ethylene content $C2_{CF}$ in the range of 0.3 to 2.5 wt.-%, more preferably 0.5 to 2.2 wt.-%, like 0.7 to 2.0 wt.-%. The crystalline fraction (CF) preferably has an intrinsic viscosity $IV_{CF}$ in the range of 0.8 to 2.5 dl/g, more preferably 0.9 to 2.3 dl/g.

The amorphous ethylene-propylene copolymer fraction (SF) of the ethylene-propylene impact copolymer preferably has an ethylene content $C2_{SF}$ in the range of 30.0 to 50.0 wt.-%, preferably 33.0 to 47.0 wt.-%. The amorphous fraction (SF) preferably has an intrinsic viscosity $IV_{SF}$ in the range of 1.7 to 4.0 dl/g, more preferably 1.9 to 3.5 dl/g.

The ratio ($IV_{SF}$ / $IV_{CF}$) between the intrinsic viscosity of the amorphous ethylene-propylene copolymer fraction (SF) and the intrinsic viscosity of the crystalline polypropylene homopolymer fraction (CF) is preferably in the range of 0.9 to 3.5, more preferably in the range of 1.0 to 3.0, like in the range of 1.1 to 2.8.

**Nucleating agents**

The nucleating agents (forming a nucleation system) of the present invention will be described below. The present invention is based on the favorable interactions of two specific particulate nucleating agents with a high-flow impact copolymer as defined in the present invention. Although the specific interaction achieved by this combination is not fully understood, it was found that this combination provides remarkable improvements. The term *"particulate nucleating agent"* means that the respective nucleating agent neither melts nor dissolves in the polypropylene copolymer in the temperature range used for processing, like in the temperature range between the melting point and 300°C. For details, reference is made to M. Gahleitner, C. Grein, S. Kheirandish & J. Wolfschwenger, "Nucleation of Polypropylene Homo- and Copolymers", Intern.Polym.Proc. 26 (2011) 2-20).

The composition of the present invention contains 0.05 - 0.50 wt.-% of an $\alpha$-nucleating agent selected from the group consisting of salts of formula (I) (also referred to as "first nucleating agent") and 0.50 - 2.00 wt.-% of a mineral $\alpha$-nucleating agent (also referred to as a *"second nucleating agent")*. The composition may comprise further nucleating agents as long as not imparting the properties of the composition but preferably comprises only these two types of nucleating agents.

The mineral $\alpha$-nucleating agent (second nucleating agent) preferably has a median particle size D50 in the range of from 0.5 to 10.0 $\mu$m, preferably in the range of 1.0 to 9.5 $\mu$m, more preferably in the range of 1.5 to 9.0 $\mu$m, like in the range of 2.0 to 8.5 $\mu$m, or in the range of 2.2 to 8.0 $\mu$m. The mineral $\alpha$-nucleating agent may for example be selected from the group consisting of talc, silica, calcite and rutile. Talc has been found to be particularly suitable as the mineral nucleating agent of the present invention and is thus preferably used.

The content of the second nucleating agent in the composition of the invention is preferably 0.55 - 1.95 wt.-%.

The first nucleating agent is at least one compound (preferably exactly one compound) selected from the group consisting of organic metal salts represented by formula (I): $Ra_n\ M_m\ X_o$ Formula (I)

In formula (I), M is independently a metal cation, X is independently an anion, Ra is independently an organic anion of the following formula (II)

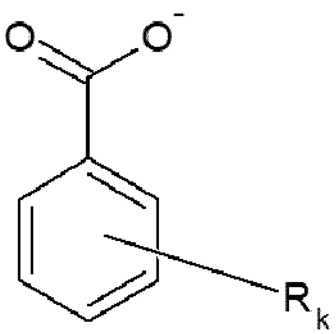

Formula (II)

wherein R is independently an aliphatic hydrocarbon group, k is independently in the range of 1 to 3, n is in the range of 1 to 4, m is 1 or 2, and o is selected so that the total charge of the salt of formula (I) is 0. k, m, n and o are preferably integers (or 0 in the case of o). In this context, the term *"independently"* means that if multiple groups/ions are present, these are independently selected from the mentioned list. Preferably, the independently selected groups/ions are the same, i.e. formula (I) refers to a single compound. Further, the term *"o is selected so that e total charge of the salt of formula (I) is* 0" means that the number of valences of the ions in formula (I), i.e. -1 for Ra, positive for M and negative for X are matched. For example, when using "$Na^+$" as "M" and m=1 than o must be 0 (and n must be 1). When using "$Ca^{2+}$" as "M", m=1, then o must be 0 as well when n=2 and o must be 1 when n=1 and X is a monovalent anion, like "$OH^-$". When using "$Al^{3+}$" as "M", m=1 and n=2, then o is 1 when X is a monovalent anion, like "$OH^-$".

The salt of formula (I) contains the organic anion Ra and is thus a salt of an aromatic carboxylic acid (aromatic carboxylic acid salt). As shown in formula (II), the position of R may be freely selected, but is preferably meta (3,5) position and/or para (4) position, preferably at least para position.

In formula (I), M is independently an alkali metal cation, an alkaline earth metal cation, boron cation or aluminum cation, preferably an alkali metal cation or aluminum cation.

In formula (I), m is 1 or 2, preferably 1. o is preferably 0, 1 or 2, more preferably 0 or 1. X is preferably independently an inorganic anion, more preferably a monovalent inorganic anion. X is preferably selected from the group consisting of $Cl^-$, $OH^-$, $SH^-$, $HSO_3^-$, $HSO_4^-$, $NO_3^-$, $NO_2^-$ $SO_4^{2-}$, $PO_4^{3-}$, $CO_3^{2-}$, or $CN^-$, preferably $OH^-$, $SH^-$, or $NO_3^-$, more preferably $OH^-$, and o is preferably 1.

In formula (II), R is preferably independently an aliphatic hydrocarbon group having 1 to 8 carbon atoms, more preferably 2 to 6 carbon atoms, more preferably 4 to 5 carbon atoms. Preferably, at least one R is provided in para position (relative to the carboxylic acid group). Preferably, R is independently an acyclic (open-chain) aliphatic hydrocarbon. R is preferably independently a linear or branched alkyl group, preferably a branched alkyl group, more preferably selected from the group consisting of isopropyl, isobutyl, sec-butyl, tert-butyl and neopentyl. R is particularly preferably tert-butyl.

In formula (II), k is preferably 1 or 2, more preferably 1. In a preferred embodiment R is tert-butyl, the position of R is the para position and k is 1. In formula (I), n is preferably 1, 2 or 3, more preferably 1 or 2, even more preferably 2. Preferably, M is an alkali metal cation or alumina cation, n is 1 or 2, m is 1, o is 0 or 1, X is OH- or $NO_3^-$, and R is tert-buty, iso-butyl or neopentyl. Formula (I) is preferably represented by $(Ra)_2(OH)Al$.

The content of the first nucleating agent in the composition of the invention is preferably 0.08 - 0.40 wt.-%.

## Impact copolymer production method

The impact copolymer may be produced by a series of reactions to create an inreactor blend of polymers which actually results in a heterophasic arrangement comprising a crystalline fraction and an amorphous fraction. Polymerization in the presence of a Ziegler-Natta catalyst is particularly preferred since this facilitates adjusting the properties of the impact copolymer in a favorable manner.

A preferred multistage process for producing the impact copolymer is a "loop-gas phase"-process, such as developed by Borealis A/S, Denmark (known as BORSTAR® technology) described e.g. in patent literature, such as in EP 0 887 379 , WO 92/12182, WO 2004/000899, WO 2004/111095, WO 99/24478, WO 99/24479 or in WO 00/68315. A further suitable slurry-gas phase process is the Spheripol® process of Basell.

The ethylene-propylene impact copolymer is preferably produced by a process comprising the steps of:

a) Polymerizing propylene in the presence of a Ziegler-Natta type catalyst system in a first polymerization reactor for producing a first propylene polymer fraction;
b) Transferring a polymerization mixture comprising the Ziegler-Natta type catalyst system and the first propylene polymer fraction from the first polymerization reactor to a second polymerization reactor;
c) Polymerizing propylene in the presence of the Ziegler-Natta type catalyst system in the second polymerization

reactor for producing a second propylene polymer fraction;

d) Transferring a polymerization mixture comprising the Ziegler-Natta type catalyst system and the first and second propylene polymer fractions from the second polymerization reactor to a third polymerization reactor;

e) Polymerizing propylene and ethylene in the presence of a Ziegler-Natta type catalyst system in the third polymerization reactor for producing a third propylene-ethylene copolymer fraction;

f) Withdrawing a polymerization mixture comprising the Ziegler-Natta type catalyst system, the first and second propylene polymer fractions and the third propylene-ethylene copolymer fraction from the third polymerization reactor; and

g) Obtaining a polymer composition comprising the first and second propylene polymer fractions and the third propylene-ethylene copolymer fraction, said process being optionally preceded by a pre-polymerization step.

The first polymerization reactor preferably is a slurry phase reactor, like a loop reactor, most suitably a liquid bulk loop reactor.

Although reaction conditions are not particularly limited, it is preferred that the operating temperature in the first polymerization reactor, preferably the loop reactor, is in the range from 62 to 85°C, more preferably in the range from 65 to 82°C, still more preferably in the range from 67 to 80°C. Typically, the pressure in the first polymerization reactor, preferably in the loop reactor, is in the range from 20 to 80 bar, preferably 30 to 70 bar, like 35 to 65 bar (absolute).

It is preferred that in the first polymerization reactor, preferably the loop reactor, a propylene homopolymer is produced. Thus, it is preferred that the first propylene polymer fraction is a propylene homopolymer fraction.

Hydrogen is conventionally added in the first polymerization reactor in order to control the molecular weight, and thus the melt flow rate MFR2.

Preferably the hydrogen to propylene ratio ($H_2/C_3$ ratio) in the first polypropylene reactor, preferably the loop reactor, is in the range from 1.5 to 20.0 mol/kmol, more preferably 2.0 to 15.0 mol/kmol. It is preferred that the first propylene polymer fraction has a melt flow rate MFR2 (230°C, 2.16 kg, ISO 1133) in the range of 10 to 200 g/10 min, preferably in the range of 15 to 180 g/10 min, more preferably in the range of 18 to 150 g/10 min.

The second polymerization reactor may be a liquid bulk loop reactor or a gas phase reactor, preferably a gas phase reactor. The second polymerization reactor preferably is a (first) gas phase reactor, like a first fluidized bed gas phase reactor.

It is preferred that the operating temperature in the second polymerization reactor, preferably the first gas phase reactor, is in the range from 60 to 95 °C, more preferably in the range from 65 to 85 °C.

Typically, the pressure in the second polymerization reactor, preferably in the first gas phase reactor, is in the range from 5 to 50 bar, preferably 15 to 40 bar.

It is preferred that in the second polymerization reactor, preferably the first gas phase reactor, a propylene homopolymer is produced. Thus, it is preferred that the second propylene polymer fraction is a propylene homopolymer fraction.

Preferably hydrogen is added in the second polymerization reactor in order to control the molecular weight, and thus the melt flow rate MFR2.

Preferably the hydrogen to propylene ratio (H2/C3 ratio) in the second polypropylene reactor, preferably the first gas phase reactor, is in the range from 20 to 200 mol/kmol, more preferably 30 to 150 mol/kmol.

It is preferred that the combined first and second propylene polymer fractions have a melt flow rate MFR2 (230°C, 2.16 kg, ISO 1133) in the range 10 to 200 g/10 min, preferably in the range of 12 to 150 g/10 min, more preferably in the range of 15 to 120 g/10 min. It is further preferred that the combined first and second propylene polymer fractions have fraction soluble in cold xylene at 25°C (XCS) in an amount not more than 3.5 wt.-%, preferably in the range of 0.1 to 3.0 wt.-%, based on the total weight of the combined first and second propylene polymer fractions.

The third polymerization reactor preferably is a (second) gas phase reactor, like a second fluidized bed gas phase reactor.

It is preferred that the operating temperature in the third polymerization reactor, preferably the second gas phase reactor, is in the range from 65 to 85 °C, more preferably in the range from 68 to 82 °C. Typically, the operating temperature in third polymerization reactor is lower than the operating temperature in the second polymerization reactor.

Typically, the pressure in the third polymerization reactor, preferably in the second gas phase reactor, is in the range from 5 to 50 bar, preferably 15 to 40 bar.

In the third polymerization reactor, preferably the second gas phase reactor, a propylene ethylene copolymer is produced. Thus, the third propylene polymer fraction is a propylene ethylene copolymer fraction.

The ethylene to propylene ratio (C2/C3 ratio) in the third polymerization reactor, preferably the second gas phase reactor, is preferably in the range from 100 to 800 mol/kmol, more preferably 200 to 600 mol/kmol.

Preferably hydrogen is added in the second polymerization reactor in order to control the molecular weight, and thus the melt flow rate MFR2.

Preferably, the hydrogen to ethylene ratio (H2/C2 ratio) in the third polymerization reactor, preferably the second

gas phase reactor, is in the range from 100 mol/kmol to 400 mol/kmol, more preferably 150 to 300 mol/kmol.

The preparation of the first, second and third propylene polymer fractions can comprise in addition to the (main) polymerization stages in the at least three polymerization prior thereto a pre-polymerization in a pre-polymerization reactor upstream to the first polymerization reactor.

In the pre-polymerization reactor, a polypropylene is preferably produced. The pre-polymerization is preferably conducted in the presence of the Ziegler-Natta catalyst system. According to this embodiment, the Ziegler-Natta catalyst system is introduced to the pre-polymerization step. However, this shall not exclude the option that at a later stage for instance further cocatalyst is added in the polymerization process, for instance in the first reactor. In one embodiment, all components of the Ziegler-Natta type catalyst are only added in the pre-polymerization reactor, if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein.

It is possible to add other components also to the pre-polymerization stage. Thus, hydrogen may be added into the pre-polymerization stage to control the molecular weight of the polypropylene as is known in the art. Further, antistatic additives may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture of the Ziegler-Natta type catalyst system and the polypropylene produced in the pre-polymerization reactor is obtained. Preferably, the single Ziegler-Natta type catalyst is (finely) dispersed in the polypropylene. In other words, the single site catalyst particles introduced in the pre-polymerization reactor are split into smaller fragments that are evenly distributed within the growing polypropylene. The sizes of the introduced single site catalyst particles as well as of the obtained fragments are not of essential relevance for the instant invention and within the skilled knowledge.

As mentioned above, if a pre-polymerization is used, subsequent to said pre-polymerization, the mixture of the single site catalyst and the polypropylene produced in the pre-polymerization reactor is transferred to the first polymerization reactor.

In case that pre-polymerization is not used, propylene and the other ingredients such as the Ziegler-Natta catalyst system are directly introduced into the first polymerization reactor. The residence times of the polymerization mixtures in the different polymerization stages may be adjusted to obtain the amounts of first, second and third polymer fractions in the impact copolymer.

Preferably the first propylene polymer fraction is present in an amount of from 30 to 60 wt.-%, more preferably from 35 to 55 wt.-%, based on the total weight of the combined first, second and third propylene polymer fractions. The amount of the polypropylene produced in the pre-polymerization reactor, if present, is generally added to the amount of the first propylene polymer fraction.

Preferably the second propylene polymer fraction is present in an amount of from 25 to 50 wt.-%, more preferably from 30 to 45 wt.-%, based on the total weight of the combined first, second and third propylene polymer fractions.

Preferably the third propylene polymer fraction is present in an amount of from 10 to 30 wt.-%, more preferably from 12 to 25 wt.-%, based on the total weight of the combined first, second and third propylene polymer fractions.

The Ziegler-Natta catalyst system preferably comprises (a) a Ziegler-Natta catalyst (ZN-C) comprising compounds (TC) of a transition metal of Group 4 to 6 (according to IUPAC), a Group 2 metal compound (MC) and an internal donor (ID); (b) a co-catalyst (Co), and (c) optionally an external donor (ED).

The catalyst used in the present invention is a solid Ziegler-Natta catalyst (ZN-C), which comprises compounds (TC) of a transition metal of Group 4 to 6 (IUPAC), like titanium, a Group 2 metal compound (MC), like a magnesium, and an internal donor (ID) preferably being a non-phthalic compound, more preferably a non-phthalic acid ester, still more preferably being a diester of non-phthalic dicarboxylic acids as described in more detail below. Thus, the catalyst is preferably fully free of (undesired) phthalic compounds. Further, the solid catalyst is preferably free of any external support material, like silica or MgClz, but the catalyst is self-supported. A self-supported catalyst is not necessarily free of magnesium halides, since these are formed during the reaction between the magnesium compound and $TiCl_4$; however, the presence of magnesium halides as external support media is preferably excluded.

The Ziegler-Natta catalyst (ZN-C) can be further defined by the way as obtained. Accordingly, the Ziegler-Natta catalyst (ZN-C) is preferably obtained by a process comprising the steps of

a)

a1) providing a solution of at least a Group 2 metal alkoxy compound (Ax) being the reaction product of a Group 2

metal compound (MC) and an alcohol (A) comprising in addition to the hydroxyl moiety at least one ether moiety optionally in an organic liquid reaction medium; or

a2 ) a solution of at least a Group 2 metal alkoxy compound (Ax') being the reaction product of a Group 2 metal compound (MC) and an alcohol mixture of the alcohol (A) and a monohydric alcohol (B) of formula ROH, optionally in an organic liquid reaction medium; or

a3 ) providing a solution of a mixture of the Group 2 alkoxy compound (Ax) and a Group 2 metal alkoxy compound (Bx) being the reaction product of a Group 2 metal compound (MC) and the monohydric alcohol (B), optionally in an organic liquid reaction medium; and

b) adding said solution from step a) to at least one compound (TC) of a transition metal of Group 4 to 6 and
c) obtaining the solid catalyst component particles,

and adding a preferably non-phthalic internal electron donor (ID) at any (arbitrary) step prior to step c).

The internal donor (ID) or precursor thereof is added preferably to the solution of step a).

According to the procedure above, the Ziegler-Natta catalyst (ZN-C) can be obtained via precipitation method or via emulsion (liquid/liquid two-phase system) - solidification method depending on the physical conditions, especially temperature used in steps b) and c). In both methods (precipitation or emulsionsolidification) the catalyst chemistry is the same.

In precipitation method combination of the solution of step a) with at least one transition metal compound (TC) in step b) is carried out and the whole reaction mixture is kept at least at 50°C, more preferably in the temperature range of 55 to 110°C, more preferably in the range from 70 to 100°C, to secure full precipitation of the catalyst component in form of a solid particles (step c).

In emulsion - solidification method in step b) the solution of step a) is typically added to the at least one transition metal compound (TC) at a lower temperature, such as from -10 to below 50°C, preferably from -5 to 30°C. During agitation of the emulsion, the temperature is typically kept at -10 to below 40°C, preferably from -5 to 30°C. Droplets of the dispersed phase of the emulsion form the active catalyst composition. Solidification (step c) of the droplets is suitably carried out by heating the emulsion to a temperature of 70 to 150°C, preferably to 80 to 110°C. The catalyst prepared by emulsion - solidification method is preferably used in the present invention.

In a preferred embodiment in step a) the solution of a2 ) or a3 ) are used, i.e. a solution of (Ax') or a solution of a mixture of (Ax) and (Bx). Preferably the Group 2 metal (MC) is magnesium.

The magnesium alkoxy compounds (Ax), (Ax') and (Bx) can be prepared *in situ* in the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are monoethers of dihydric alcohols (glycol monoethers). Preferred alcohols (A) are $C_2$ to $C_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

Illustrative monohydric alcohols (B) are of formula ROH, with R being straight-chain or branched $C_6$ -$C_{10}$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 8:1 to 2:1, more preferably 5:1 to 3:1.

Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Alkyl groups can be a similar or different $C_1$ - $C_{20}$ alkyl, preferably $C_2$ - $C_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably, dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula $R''(OH)_s$ to obtain said magnesium alkoxide compounds. Preferred polyhydric alcohols, if used, are alcohols, wherein R" is a straight-chain, cyclic or branched $C_2$ to $C_{10}$ hydrocarbon residue, and s is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Hexanes and pentanes are particular preferred.

Mg compound is typically provided as a 10 to 50 wt.-% solution in a solvent as indicated above. Typical commercially available Mg compound, especially dialkyl magnesium solutions are 20 - 40 wt.-% solutions in toluene or heptanes.

The reaction for the preparation of the magnesium alkoxy compound may be carried out at a temperature of 40° to 70°C. Most suitable temperature is selected depending on the Mg compound and alcohol(s) used.

The transition metal compound of Group 4 to 6 is preferably a titanium compound, most preferably a titanium halide, like $TiCl_4$.

The internal donor (ID) used in the preparation of the catalyst used in the present invention is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with an aromatic and/or aliphatic hydrocarbons, preferably with toluene, heptane or pentane. The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 $\mu$m, preferably 10 to 100 $\mu$m. Particles preferably are compact with low porosity and have surface area below 20 $g/m^2$, more preferably below 10 $g/m^2$. Typically the amount of Ti is 1 to 6 wt.-%, the amount of Mg is 10 to 20 wt.-% and the amount of donor is 10 to 40 wt.-% of the catalyst composition.

Detailed description of preparation of catalysts is disclosed in WO 2012/007430 , EP 2610271 , EP 261027 and EP 2610272 which are incorporated here by reference.

The Ziegler-Natta catalyst (ZN-C) is preferably used in association with an alkyl aluminum cocatalyst and optionally external donors.

As further component in the instant polymerization process, an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$$R^a_pR^b_qSi(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$ , $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$_2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl. More preferably, both $R^3$ and $R^4$ are the same, yet more preferably both $R^3$ and $R^4$ are an ethyl group.

Especially preferred external donors (ED) are the dicyclopentyl dimethoxy silane donor (D donor) or the

cyclohexylmethyl dimethoxy silane donor (C-Donor). In addition to the Ziegler-Natta catalyst (ZN-C) and the optional external donor (ED) a cocatalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Preferably, the ratio between the co-catalyst (Co) and the external donor (ED) [Co/ED] and/or the ratio between the co-catalyst (Co) and the transition metal (TM) [Co/TM] should be adjusted within certain limits. More specifically,

(a) the mol-ratio of co-catalyst (Co) to external donor (ED) [Co/ED] should preferably be in the range from 5 to 45, preferably is in the range from 5 to 35, more preferably is in the range from 5 to 25;
and optionally
(b) the mol-ratio of co-catalyst (Co) to titanium compound (TC) [Co/TC] should preferably be in the range from above 80 to 500, preferably is in the range from 100 to 350, still more preferably is in the range from 120 to 300.

When employing a Ziegler-Natta catalyst system in a multi-reactor arrangement as pointed out above, it is preferred that at least part of, preferably all of, the ZN-C be fed into the first polymerization reactor and is transferred with the polymer (slurry) obtained in the first polymerization reactor into the subsequent reactors, should any subsequent reactors be used. If the process covers also a pre-polymerization step, it is preferred that at least part of, preferably all of, the Ziegler-Natta catalyst (ZN-C) be fed into the pre-polymerization reactor. Subsequently the pre-polymerization product containing the Ziegler-Natta catalyst (ZN-C) is transferred into the first polymerization reactor. Co-catalyst and, if present, external donor, are preferably fed together with the ZN-C.

A preferable catalyst system for producing the impact copolymer of the present invention (as well as a production method for such a catalyst system) is described in EP4141068 A1, which is herewith incorporated by reference.

**Use of composition, molded product and article**

The present invention furthermore relates to a use of the composition according to the invention for preparing a product or article, specifically a molded product or article, and to an article prepared using the composition.

More specifically, the present invention relates to a molded product comprising 50 to 100 wt.-% of the ethylene-propylene copolymer composition of the invention, preferably comprising 60 to 100 wt.-%, more preferably comprising 70 to 100 wt.-%, like 80 to 100 wt.-%, 90 to 100 wt.-%, 95 to 100 wt.-%, 98 to 100 wt.-%, or 98 to 99 wt.-% of the ethylene-propylene copolymer composition.

The invention also relates to a use of the ethylene-propylene copolymer composition of the invention for preparing a molded product, like a packaging article, an automotive exterior part, an automotive interior part, or a housing for appliance or electronics, and/or for preparing an injection molded article having an average wall thickness of 2 mm or less. The injection molded article may be a thin-wall packaging article, like a cup, a tray, a pail or a lid. The injection molded article may have a wall thickness in the range of from 0.1 to 2.0 mm, like 0.2 to 2.0 mm.

The molded product may, for example, be an injection molded product or fiber reinforced composite. In this respect, the term "product" (and similarly "article") shall encompass end-products (e.g. for sale) and intermediate products (e.g. for further processing).

The molded product can be an automotive article comprising the ethylene-propylene copolymer composition.

The molded product can also be a packaging article, preferably a thin wall packaging article, like plastics cups, pails and small containers including lids for the same, e.g. intended for food packaging comprising the ethylene-propylene copolymer composition.

In one embodiment, the composition of the molded product can comprise fibers, like glass fibers or carbon fibers, preferably in an amount of 0 wt.-% (no fibers present) to 50 wt.-% (relative to the molded product as a whole being 100 wt.-%). In case fibers are present in the composition of the molded product, the amount of fibers is more preferably in the range of from 5 to 40 wt.-%, based on the composition of the molded product.

The molded product comprises the copolymer composition of the present invention in an amount of 50-100 wt.-%. Accordingly, the total content of fibers is at most 50 wt.-%.

In general and in particular, the present invention relates to one or more of the following items:

**1.** An ethylene-propylene copolymer composition comprising

A) 97.00 - 99.45 wt.-% of an ethylene-propylene impact copolymer comprising

a1) 75 - 88 wt.-%, relative to 100 wt.-% of the ethylene-propylene impact copolymer, of a crystalline

polypropylene homopolymer fraction (CF, determined by CRYSTEX QC analysis) having an intrinsic viscosity $IV_{CF}$ (according to ISO 1628/1, measured in Decalin at 135 °C) in the range of 0.7 to 2.6 dl/g, and a2) 12 - 25 wt.-%, relative to 100 wt.-% of the ethylene-propylene impact copolymer, of an amorphous ethylene-propylene copolymer fraction (SF, determined by CRYSTEX QC analysis) having an intrinsic viscosity $IV_{SF}$ (according to ISO 1628/1, measured in Decalin at 135 °C) in the range of 1.5 to 4.5 dl/g and an ethylene content $C2_{SF}$ (as determined by FT-IR spectroscopy calibrated by quantitative $^{13}$C-NMR spectroscopy) in the range of 25.0 to 55.0 wt.-%,

B) 0.05 - 0.50 wt.-% of an $\alpha$-nucleating agent selected from the group consisting of salts of formula (I) below

$$Ra_n\ M_m\ X_o \qquad \text{Formula (I)}$$

wherein M is independently a metal cation, X is independently an anion, Ra is an organic anion of the following formula (II)

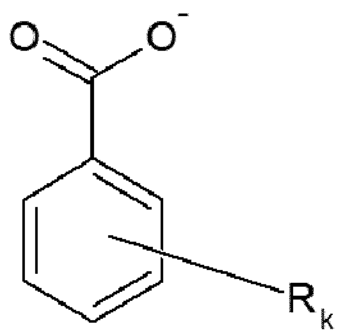

Formula (II)

wherein R is an aliphatic hydrocarbon group, k is in the range of 1 to 3, n is in the range of 1 to 4, m is 1 or 2, and o is selected so that the total charge of the salt of formula (I) is 0, and

C) 0.50 - 2.00 wt.-% of a mineral $\alpha$-nucleating agent having a median particle size D50 (according to ISO 13317-3, Sedigraph method) of less than 10 $\mu$m,

said composition having an MFR (according to ISO 1133 at 230°C and 2.16 kg load) of more than 10 g/10min.

**2.** The ethylene-propylene copolymer composition according to item 1, wherein the mineral $\alpha$-nucleating agent has a median particle size D50 in the range of from 0.5 to 10.0 $\mu$m, preferably in the range of from 1.0 to 9.5 $\mu$m, like 1.5 to 9.0 $\mu$m, 2.0 to 8.5 $\mu$m, or 2.2 to 8.0 $\mu$m.

**3.** The ethylene-propylene copolymer composition according to item 1 or 2, wherein the mineral $\alpha$-nucleating agent is talc.

**4.** The ethylene-propylene copolymer composition according to any one of items 1 to 3, further comprising up to 2.45 wt.-%, preferably 0.01 to 2.45 wt.-%, additive(s), said additives being preferably selected from the group consisting of antioxidants, UV-stabilizers, antistatic agents, acid scavengers, and slip agents.

**5.** The ethylene-propylene copolymer composition according to any one of items 1 to 4, wherein the composition has a Mechanical Performance Parameter MPP1, defined as the product of NIS23 (Charpy notched impact strength according to ISO 179 1eA at 23°C) [kJ/m$^2$] and Flexural modulus (according to ISO 178) [MPa], of 9900 or more, preferably in the range of from 10000 to 16000.

**6.** The ethylene-propylene copolymer composition according to any one of items 1 to 5, wherein the composition has a Mechanical Performance Parameter MPP2, defined as the product of NIS23 [kJ/m$^2$] and Flexural modulus [MPa] divided by MD Shrinkage (Shrinkage in the machine direction; measured as defined below) [%], in the range of from 6500 to 12000, preferably 6700 to 10000.

**7.** The ethylene-propylene copolymer composition according to any one of items 1 to 6, wherein the composition has an MFR in the range of 11 to 100 g/10min, preferably in the range of 12 to 90 g/10min.

**8.** The ethylene-propylene copolymer composition according to any one of items 1 to 7, wherein the composition has a

crystallization temperature Tc (determined based on differential scanning calorimetry, DSC, according to ISO 11357) in the range of from 125 to 135°C, preferably 128 to 132°C.

**9.** The ethylene-propylene copolymer composition according to any one of items 1 to 8, wherein the composition has a Flexural modulus (according to ISO 178) in the range of 1400 to 1750 MPa, preferably 1450 to 1700 MPa.

**10.** The ethylene-propylene copolymer composition according to any one of items 1 to 9, wherein the composition has a NIS23 (Charpy notched impact strength according to ISO 179 1eA at 23°C) of 5.5 kJ/$m^2$ or more, preferably in the range of 6.0 to 15.0 kJ/$m^2$, like in the range of 6.5 to 12.5 kJ/$m^2$.

**11.** The ethylene-propylene copolymer composition according to any one of items 1 to 10, wherein the composition has a NIS-20°C (Charpy notched impact strength according to ISO 179 1eA at -20°C) of 2.5 kJ/$m^2$ or more, preferably in the range of 2.8 to 7.0 kJ/$m^2$, like in the range of 2.9 to 6.5 kJ/$m^2$.

**12.** The ethylene-propylene copolymer composition according to any one of items 1 to 11, wherein the composition has a heat distortion temperature (HDT; according to ISO 75 B, low load, measured on $80\times10\times4$ $mm^3$ specimens) in the range of 95 to 115°C, preferably 97 to 112°C, like 98 to 110°C.

**13.** The ethylene-propylene copolymer composition according to any one of items 1 to 12, wherein the composition has a shrinkage in the machine direction (MD shrinkage; measured as defined in the description) of 1.75% or less, preferably in the range of 0.90% to 1.70%.

**14.** The ethylene-propylene copolymer composition according to any one of items 1 to 13, wherein the ethylene-propylene impact copolymer comprises a1) 77 - 86 wt.-%, preferably 79 - 85 wt.-%, of the crystalline polypropylene homopolymer fraction (CF) and a2) 14 - 23 wt.-%, preferably 15 - 21 wt.-%, of the amorphous ethylene-propylene copolymer fraction (SF).

**15.** The ethylene-propylene copolymer composition according to any one of items 1 to 14, wherein the ethylene-propylene impact copolymer has a xylene cold soluble content (XCS at 25 °C according to ISO 16152) in the range of from 12 to 30 wt.-%, preferably 14 to 25 wt.-%, like 15 to 22 wt.-%.

**16.** The ethylene-propylene copolymer composition according to any one of items 1 to 15, wherein the ethylene-propylene impact copolymer has a total C2 content as determined by FT-IR spectroscopy calibrated by quantitative $^{13}C$-NMR spectroscopy in the range of from 4.2 to 11.2 wt.-%, preferably 5.0 to 10.5 wt.-%, like 5.5 to 10.0 wt.-%.

**17.** The ethylene-propylene copolymer composition according to any one of items 1 to 16, wherein the ethylene-propylene impact copolymer has a C2 content in the xylene cold soluble fraction C2-XCS as determined by FT-IR spectroscopy calibrated by quantitative $^{13}C$-NMR spectroscopy in the range of from 30 to 50 wt.-%, preferably 32 to 47 wt.-%, like 35 to 45 wt.-%.

**18.** The ethylene-propylene copolymer composition according to any one of items 1 to 17, wherein the ethylene-propylene impact copolymer has an intrinsic viscosity $IV_{EP}$ in the range of from 0.8 to 3.0 dl/g, preferably 1.0 to 2.8 dl/g, like 1.2 to 2.6 dl/g.

**19.** The ethylene-propylene copolymer composition according to any one of items 1 to 18, wherein the ethylene-propylene impact copolymer has an MFR (according to ISO 1133 at 230°C and 2.16 kg load) of more than 10 g/10min, preferably in the range of from 11 to 100 g/10min, preferably in the range of 12 to 90 g/10min.

**20.** The ethylene-propylene copolymer composition according to any one of items 1 to 19, wherein the ethylene-propylene impact copolymer has a melting temperature Tm (determined based on differential scanning calorimetry, DSC, according to ISO 11357) in the range of from 160 to 170°C, preferably 162 to 168°C.

**21.** The ethylene-propylene copolymer composition according to any one of items 1 to 20, wherein the crystalline polypropylene homopolymer fraction (CF) has an ethylene content $C2_{CF}$ in the range of 0.3 to 2.5 wt.-%, preferably 0.5 to 2.2 wt.-%, like 0.7 to 2.0 wt.-%.

**22.** The ethylene-propylene copolymer composition according to any one of items 1 to 21, wherein the amorphous ethylene-propylene copolymer fraction (SF) has an ethylene content $C2_{SF}$ in the range of 30.0 to 50.0 wt.-%,

preferably 33.0 to 47.0 wt.-%.

**23.** The ethylene-propylene copolymer composition according to any one of items 1 to 22, wherein the crystalline polypropylene homopolymer fraction (CF) has an intrinsic viscosity $IV_{CF}$ in the range of 0.8 to 2.5 dl/g, preferably 0.9 to 2.3 dl/g

**24.** The ethylene-propylene copolymer composition according to any one of items 1 to 23, wherein the amorphous ethylene-propylene copolymer fraction (SF) has an intrinsic viscosity $IV_{SF}$ in the range of 1.7 to 4.0 dl/g, preferably 1.9 to 3.5 dl/g

**25.** The ethylene-propylene copolymer composition according to any one of items 1 to 24, wherein the ratio ($IV_{SF}$ / $IV_{CF}$) between the intrinsic viscosity of the amorphous ethylene-propylene copolymer fraction (SF) and the intrinsic viscosity of the crystalline polypropylene homopolymer fraction (CF) is in the range of 0.9 to 3.5, preferably 1.0 to 3.0, like 1.1 to 2.8.

**26.** The ethylene-propylene copolymer composition according to any one of items 1 to 25, wherein, in formula (I), M is independently an alkali metal cation, an alkaline earth metal cation, boron cation or aluminum cation, preferably an alkali metal cation or aluminum cation.

**27.** The ethylene-propylene copolymer composition according to any one of items 1 to 26, wherein, in formula (I), m is 1.

**28.** The ethylene-propylene copolymer composition according to any one of items 1 to 27, wherein, in formula (I), o is 0, 1 or 2, preferably 0 or 1.

**29.** The ethylene-propylene copolymer composition according to any one of items 1 to 28, wherein, in formula (I), o is 1 or 2, preferably 1, and X is independently an inorganic anion, preferably a monovalent inorganic anion.

**30.** The ethylene-propylene copolymer composition according to any one of items 1 to 29, wherein, in formula (I) X is selected from the group consisting of $Cl^-$, $OH^-$, $SH^-$, $HSO_3^-$, $HSO_4^-$, $NO_3^-$, $NO_2^-$ $SO_4^{2-}$, $PO_4^{3-}$, $CO_3^{2-}$, or $CN^-$, preferably $OH^-$, $SH^-$, or $NO_3^-$, more preferably $OH^-$, and o is preferably 1 or 2, more preferably 1.

**31.** The ethylene-propylene copolymer composition according to any one of items 1 to 30, wherein, in formula (II), R is independently an aliphatic hydrocarbon group having 1 to 8 carbon atoms, preferably 2 to 6 carbon atoms, more preferably 4 to 5 carbon atoms.

**32.** The ethylene-propylene copolymer composition according to any one of items 1 to 31, wherein, in formula (II), at least one R is provided in para position.

**33.** The ethylene-propylene copolymer composition according to any one of items 1 to 32, wherein, in formula (II), R is independently an acyclic (open-chain) aliphatic hydrocarbon.

**34.** The ethylene-propylene copolymer composition according to any one of items 1 to 33, wherein, in formula (II), R is independently a linear or branched alkyl group, preferably a branched alkyl group, more preferably selected from the group consisting of isopropyl, isobutyl, sec-butyl, tert-butyl and neopentyl, preferably tert-butyl.

**35.** The ethylene-propylene copolymer composition according to any one of items 1 to 34, wherein, in formula (II), R is tert-butyl.

**36.** The ethylene-propylene copolymer composition according to any one of items 1 to 35, wherein, in formula (II), k is 1 or 2, preferably 1.

**37.** The ethylene-propylene copolymer composition according to any one of items 1 to 36, wherein, in formula (I), n is 1, 2 or 3, preferably 1 or 2, more preferably 2.

**38.** The ethylene-propylene copolymer composition according to any one of items 1 to 37, wherein, M is an alkali metal cation or alumina cation, n is 1 or 2, m is 1, o is 0 or 1, X is OH- or $NO_3^-$, and R is tert-buty, iso-butyl or neopentyl.

**39.** The ethylene-propylene copolymer composition according to any one of items 1 to 38, wherein, formula (I) is represented by $(Ra)_2(OH)Al$.

**40.** The ethylene-propylene copolymer composition according to any one of items 1 to 39, wherein the ethylene-propylene impact copolymer is produced by a process comprising the steps of:

a) Polymerizing propylene in the presence of a Ziegler-Natta type catalyst system in a first polymerization reactor for producing a first propylene polymer fraction;
b) Transferring a polymerization mixture comprising the Ziegler-Natta type catalyst system and the first propylene polymer fraction from the first polymerization reactor to a second polymerization reactor;
c) Polymerizing propylene in the presence of the Ziegler-Natta type catalyst system in the second polymerization reactor for producing a second propylene polymer fraction;
d) Transferring a polymerization mixture comprising the Ziegler-Natta type catalyst system and the first and second propylene polymer fractions from the second polymerization reactor to a third polymerization reactor;
e) Polymerizing propylene and ethylene in the presence of a Ziegler-Natta type catalyst system in the third polymerization reactor for producing a third propylene-ethylene copolymer fraction;
f) Withdrawing a polymerization mixture comprising the Ziegler-Natta type catalyst system, the first and second propylene polymer fractions and the third propylene-ethylene copolymer fraction from the third polymerization reactor; and
g) Obtaining a polymer composition comprising the first and second propylene polymer fractions and the third propylene-ethylene copolymer fraction,
said process being optionally preceded by a pre-polymerization step.

**41.** The ethylene-propylene copolymer composition according to item 40, wherein the first polymerization reactor is a liquid bulk loop reactor.

**42.** The ethylene-propylene copolymer composition according to item 40 or 41, wherein the second polymerization reactor is a liquid bulk loop reactor or a gas phase reactor, preferably a gas phase reactor.

**43.** The ethylene-propylene copolymer composition according to any one of items 40 to 42, wherein the third polymerization reactor is a gas phase reactor.

**44.** The ethylene-propylene copolymer composition according to any one of items 1 to 43, comprising 0.55 - 1.95 wt.-%, of the mineral $\alpha$-nucleating agent.

**45.** The ethylene-propylene copolymer composition according to any one of items 1 to 44, comprising 0.08 - 0.40 wt.-% of the $\alpha$-nucleating agent selected from the group consisting of salts of formula (I).

**46.** Molded product comprising 50 to 100 wt.-% of the ethylene-propylene copolymer composition according to any one of items 1 to 45.

**47.** Molded product according to item 46, comprising 60 to 100 wt.-%, preferably 70 to 100 wt.-%, like 80 to 100 wt.-%, 90 to 100 wt.-%, 95 to 100 wt.-%, 98 to 100 wt.-%, or 98 to 99 wt.-% of the ethylene-propylene copolymer composition.

**48.** Use of a ethylene-propylene copolymer composition according to any one of items 1 to 45 for preparing a molded product, like a packaging article, an automotive exterior part, an automotive interior part, or a housing for appliance or electronics.

**49.** Use of an ethylene-propylene copolymer composition according to any one of items 1 to 45 for preparing an injection molded article having an average wall thickness of 2 mm or less.

**50.** Use according to item 49, wherein the injection molded article is a thin-wall packaging article, like a cup, a tray, a pail or a lid.

**51.** Use according to item 49 or 50, wherein the injection molded article has a wall thickness in the range of from 0.1 to 2.0 mm, like 0.2 to 2.0 mm.

**Measurement methods**

Methods for measuring properties of the composition, copolymer and product of the present invention and as used in the Examples of the present invention are described below. Unless specifically stated to the contrary, if a determination method (measurement method) is described in the context of (only) one product or material or without reference to a specific product/material, it is to be understood that the same method can be used for measurement the same property of another product/material. This similarly applies to all measurement methods disclosed herein.
MFR (MFR2) was measured according to ISO 1133 at 230°C under 2.16 kg load.
Flexural Modulus was determined in 3-point-bending according to ISO 178 on injection molded specimens of 80 × 10 × 4 $mm^3$ (80mm × 10mm × 4mm), injection molded according to EN ISO 1873-2 using a melt temperature of 200°C.
Charpy Notched Impact Strength (NIS23 and NIS-20) was determined according to ISO 179-1 eA at 23°C and -20°C, respectively, on injection molded specimens of 80 × 10 × 4 $mm^3$ injection molded according to EN ISO 1873-2.
Heat distortion temperature (HDT) was determined according to ISO 75 B (low load) measured on 80 × 10 × 4 $mm^3$ specimens injection molded according to EN ISO 1873-2.
Intrinsic viscosity $IV_{EP}$ of the impact copolymer was determined according to ISO 1628/1, measured in decalin at 135 °C. Intrinsic viscosity if crystalline fraction and amorphous fraction were determined using the CRYSTEX QC method described below.
Median particle size (D50) of the mineral $\alpha$-nucleating agent was measured according to ISO 13317-3 (Sedigraph method).
Xylene Cold Soluble (XCS) fraction was determined according to standard gravimetric method according to ISO 16152 at 25°C.

- MD Shrinkage

Shrinkage in the machine direction (molding direction) was determined on 60×60×2 $mm^3$ plates injection molded according to EN ISO 1873-2. Shrinkage measurement was based on ISO 294-4, defining MD shrinkage as post-molding shrinkage in flow (injection) direction after 96 h.

- DSC analysis

Melting temperature (Tm) and crystallization temperature (Tc) were measured by DSC analysis according to ISO 11357. Specifically, DSC was measured with a TA Instrument Q2000 differential scanning calorimeter (DSC) on 5 to 7 mg samples. DSC was run according to ISO 11357 / part 3 / method C2 in a heat / cool / heat cycle with a scan rate of 10°C/min in the temperature range of -30°C to +225°C. Crystallization temperature (Tc) was determined from the cooling step, while melting temperature (Tm) was determined from the second heating step.

- CRYSTEX QC

The crystalline (CF) and amorphous fractions (SF) of the impact copolymer as well as the comonomer content and intrinsic viscosities of the respective fractions were analyzed by use of the CRYSTEX instrument, Polymer Char (Valencia, Spain). Details of the technique and the method can be found in the literature (Ljiljana Jeremie, Andreas Albrecht, Martina Sandholzer & Markus Gahleitner (2020) "Rapid characterization of high-impact ethylene-propylene copolymer composition by crystallization extraction separation: comparability to standard separation methods", International Journal of Polymer Analysis and Characterization, 25:8, 581-596).
The crystalline and amorphous fractions are separated through temperature cycles of dissolution at 160°C, crystallization at 40°C and re-dissolution in 1,2,4-trichlorobenzene (TCB) at 160°C. Quantification of SF and CF and determination of ethylene content (C2) are achieved by means of an integrated infrared detector (IR4) and for the determination of the intrinsic viscosity (IV) an online 2-capillary viscometer is used. The IR4 detector is a multiple wavelength detector measuring IR absorbance at two different bands ($CH_3$ stretching vibration (centered at ~ 2960 $cm^{-1}$) and the CH stretching vibration (2700-3000 $cm^{-1}$) that are serving for the determination of the concentration and the Ethylene content in ethylene-propylene (EP) copolymers. The IR4 detector is calibrated with series of 8 EP copolymers with known ethylene content in the range of 2 wt.-% to 69 wt.-% (determined by $^{13}$C-NMR) and each at various concentrations, in the range of 2 and 13 mg/ml. To encounter for both features, concentration and ethylene content at the same time for various polymer concentrations expected during Crystex analyses the following calibration equations were applied:

$$Cone = a + b*Abs(CH) + c*(Abs(CH))^2 + d*Abs(CH_3) + e*(Abs(CH_3)^2 + f'*Abs(CH)*Abs(CH_3) \quad \text{(Equation 1)}$$

$$CH_3 /1000C = a + b*Abs(CH) + c*Abs(CH_3) + d*(Abs(CH_3)/Abs(CH)) + e*(Abs(CH_3)/Abs(CH))^2 \quad \text{(Equation 2)}$$

The constants a to f for equation 1 and a to e for equation 2 were determined by using least square regression analysis.

The $CH_3$/1000C is converted to the ethylene content in wt.-% using following relationship:

$$\text{wt.-\% (ethylene in copolymer)} = 100 - CH_3/1000TC * 0.3 \quad \text{(Equation 3)}$$

Amounts of amorphous fraction (SF) and crystalline fraction (CF) are correlated through the XS calibration to the "Xylene Cold Soluble" (XCS) quantity and respectively Xylene Cold Insoluble (XCI) fractions, determined according to standard gravimetric method according to ISO 16152. XS calibration is achieved by testing various copolymers with XCS content in the range 2-31 wt.-%. The determined XS calibration is linear:

$$\text{wt.-\% XCS} = 1{,}01* \text{wt.-\% SF} \quad \text{(Equation 4)}$$

Intrinsic viscosity (IV) of the copolymer and its amorphous and crystalline fractions are determined with a use of an online 2-capillary viscometer and are correlated to corresponding IV's determined by standard method in decalin according to ISO 1628-1. Calibration is achieved with various ethylene propylene copolymers with IV in the range of 2 to 4 dL/g. The determined calibration curve is linear:

$$IV (dL/g) = a* Vsp/c \quad \text{(Equation 5)}$$

The samples to be analyzed are weighed out in concentrations of 10 mg/ml to 20 mg/ml. To avoid injecting possible gels and/or polymers which do not dissolve in TCB at 160°C, the weighed out sample was packed into a stainless steel mesh MW 0.077 mm / D 0.05 mm.

After automated filling of the vial with TCB containing 250 mg/1 2,6-tert-butyl-4-methylphenol (BHT) as antioxidant, the sample was dissolved at 160°C until complete dissolution was achieved, usually for 60 min, with constant stirring of 400 rpm. To avoid sample degradation, the polymer solution was blanketed with the $N_2$ atmosphere during dissolution.

A defined volume of the sample solution was injected into a column filled with inert support where the crystallization of the sample and separation of the soluble fraction from the crystalline part is taking place. This process was repeated two times. During the first injection the whole sample was measured at high temperature, determining the IV [dl/g] and the C2 [wt.-%] of the composition. During the second injection, the soluble fraction (at low temperature) and the crystalline fraction (at high temperature) with the crystallization cycle are measured (wt.-% SF, wt.-% C2, IV).

The xylene cold soluble (XCS) content (wt.-%) was determined at 25°C according to ISO 16152.

Intrinsic viscosity was measured according to DIN ISO 1628/1 in Decalin at 135 °C.

- Quantification of microstructure by NMR spectroscopy - ethylene content

Quantitative nuclear-magnetic resonance (NMR) spectroscopy was used to quantify the comonomer content of the polymers. Quantitative $^{13}C$ {$^{1}H$} NMR spectra ($^{13}C$ measurement with $^{1}H$ decoupling) were recorded in the solutionstate using a Bruker Advance III 400 NMR spectrometer operating at 400.15 and 100.62 MHz for $^{1}H$ and $^{13}C$ respectively. All spectra were recorded using a $^{13}C$ optimized 10 mm extended temperature probe head at 125°C using nitrogen gas for all pneumatics. Approximately 200 mg of material was dissolved in 3 ml of fully deuterated 1,2-tetrachloroethane (TCE-d2) along with chromium-(III)-acetyl acetonate ($Cr(acac)_2$; relaxation agent) to result in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s relaxation delay and a bi-level WALTZ 16 decoupling scheme

(Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative 13C {1H} NMR spectra were processed, integrated and relevant quantitative properties determined from the integrals. All chemical shifts were indirectly referenced to the central methylene group of an ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regiodefects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regiodefects on determined properties was required. Characteristic signals corresponding to other types of regiodefects were not observed.

The comonomer fraction was quantified using the method of Wang et. al. (Wang, W- J., Zhu, S., Macromolecules 33 (2000), 1157) through integration of multiple signals across the whole spectral region in the $^{13}C\{^{1}H\}$ spectra. This method was chosen for its robust nature and ability to account for the presence of regiodefects when needed. Integral regions were slightly adjusted based on experience to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5\ (S\beta\beta + S\beta\gamma + S\beta\delta + 0.5\ (S\alpha\beta + S\alpha\gamma))$$

Through the use of this set of sites the corresponding integral equation becomes:

$$E = 0.5\ (I_H + I_G + 0.5\ (I_C + I_D))$$

using the same notation used in the article of Wang et. al. (Wang, W-J., Zhu, S., Macromolecules 33 (2000), 1157). Equations used for absolute propylene content were not modified. The mole percent comonomer incorporation was calculated from the mole fraction (fE):

$$E\ [mol\%] = 100 * fE$$

The weight percent comonomer incorporation was calculated from the mole fraction (fE):

$$E\ [wt.\text{-}\%] = 100 * (fE * 28.06) / ((fE * 28.06) + ((1 - fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

## Examples

The following examples are included to demonstrate certain aspects and embodiments of the invention as described in the claims. It should be appreciated by those of skill in the art, however, that the following description is illustrative only and should not be taken in any way as a restriction of the invention. Nevertheless, values, such as properties and conditions, disclosed in the Examples may be combined with ranges disclosed in a more general context (e.g. claims or general description) to give new (more limited or different) ranges without any limitation.

### Impact copolymer preparation

The ethylene-propylene impact copolymers of inventive examples IE1, IE2 and IE3 and comparative examples CE1 were prepared in a Borstar PP pilot unit with sequential process comprising a pre-polymerization reactor, a loop reactor and two gas phase reactors. The reaction conditions are summarized in Table 1.

Properties of the impact copolymer and of intermediate polymers are also set forth in Table 1.

Table 1:

| | | **Polymer 1** | **Polymer 2** |
|---|---|---|---|
| Catalyst | | ZN1 | ZN1 |
| Donor (ED) | | D-donor | D-donor |
| **Pre-pol.** | | | |
| Co/ED | mol/mol | 20 | 8 |
| Co/Ti | mol/mol | 250 | 166 |
| Temperature | °C | 26 | 30 |
| Residence time | min | 20 | 20 |
| **Loop** | | | |
| Temperature | °C | 70 | 80 |
| Split | wt.-% | 48 | 40 |
| Feed H2/C3 | mol/kmol | 3.95 | 11.5 |
| MFR | g/10min | 21 | 103 |
| **GPR1** | | | |
| Temperature | °C | 70 | 80 |
| Split | wt.-% | 35 | 40 |
| H2/C3 | mol/kmol | 40.2 | 105 |
| MFR | g/10min | 21 | 88 |
| M FR(GPR1) | g/10min | 21 | 75 |
| XCS | wt.-% | 2.0 | 2.2 |
| **GPR2** | | | |
| Temperature | °C | 70 | 75 |
| C2/C3 | mol/kmol | 440 | 445 |
| H2/C2 | mol/kmol | 220 | 160 |
| Split | wt.-% | 17 | 20 |
| **Impact copolymer** | | | |
| XCS | wt.-% | 17.0 | 19.2 |
| C2(total) | wt.-% | 7.5 | 8.2 |
| C2(XCS) | wt.-% | 38.4 | 42.1 |
| IV(XCS) | dl/g | 2.2 | 3.2 |
| MFR | g/10min | 13 | 40 |
| Tm | °C | 165 | 165 |
| Tc | °C | 120 | 124 |
| **Crystex** | | | |
| SF | wt.-% | 16.3 | 19.0 |
| CF | wt.-% | 83.7 | 81.0 |
| C2 | wt.-% | 7.5 | 8.2 |
| C2(SF) | wt.-% | 39.1 | 42.6 |
| C2(CF) | wt.-% | 1.5 | 1.8 |
| IV | dl/g | 2.2 | 1.6 |

(continued)

| Crystex | | | |
|---|---|---|---|
| IV(SF) | dl/g | 2.5 | 3.1 |
| IV(CF) | dl/g | 1.9 | 1.2 |
| IV(SF)/IV(CF) | - | 1.3 | 2.6 |

Unless explained before, abbreviations used in Table 1 are as follows:

- ZN1: emulsion-type Ziegler-Natta catalyst, being the same as the catalyst employed in the polymerization of the inventive examples of WO 2017/148970 A1 , with the exception that 15.0 g of vinylcyclohexane (VCH) were added in the modification step instead of the 5.0 g used in WO 2017/148970 A1
- D-donor: dicyclopentyl dimethoxy silane as external donor (ED)
- Co/ED: ratio between co-catalyst (triethylaluminium; TEAL) and external donor
- Co/Ti: ratio between co-catalyst and Titanium
- Split: polymer portion (wt.-%) of the final polymer originating from the respective reactor stage
- MFR(GPR1): (calculated) MFR of the polymer portion produced in GPR1

**Examples 1 and 2**

For the production of the ethylene-propylene copolymer compositions of examples 1 and 2, polymers 1 and 2, respectively, listed above in Table 1 were compounded with Antioxidant Irganox® B215 FF (a 2: 1 blend of antioxidants Irgafos® 168 (tris(2,4-ditert- butylphenyl)phosphite, CAS No: 31570-04-4) and Irganox® 1010 (pentaerythritol tetrakis [3-[3,5-di-tert-butyl-4-hydroxyphenyl]propionate], CAS No: 6683-19-8), commercially available from BASF SE), a first (mineral) nucleating agent and a second (salt) nucleating agent as shown in Table 2 below.

**Comparative Examples 1 to 4**

Compositions according to Comparative Examples 1 to 4 are prepared in the same manner as for Examples 1 and 2 using the components and compounding contents shown in Table 2 below.

Table 2:

| | | | Ex. 1 | Ex. 2 | CEx. 1 | CEx. 2 | CEx. 3 | CEx. 4 |
|---|---|---|---|---|---|---|---|---|
| Polymer 1 | | wt.-% | 99.15 | | 99.15 | | | |
| Polymer 2 | | wt.-% | | 97.95 | | 97.95 | | 94.95 |
| PPH | *1 | wt.-% | | | | | 99.15 | |
| Talc | (D50: 6.0 µm) | wt.-% | 0.70 | 1.90 | 0.70 | 1.90 | 0.70 | 5.00 |
| Salt 1 | *2 | wt.-% | 0.10 | 0.10 | | | 0.10 | |
| HPN-68 | *3 | wt.-% | | | 0.10 | 0.10 | | |
| Antioxidant | Irganox® | wt.-% | 0.05 | 0.05 | 0.05 | 0.05 | 0.05 | 0.05 |
| Tm | DSC | °C | 167 | 166 | 167 | 166 | 166 | 166 |
| Tc | DSC | °C | 130 | 131 | 131 | 133 | 128 | 127 |
| MFR | 230°C/2.16kg | gl10min | 13 | 40 | 13 | 40 | 8 | 37 |
| Flex.modulus | ISO178 | MPa | 1498 | 1575 | 1383 | 1503 | 2106 | 1453 |
| NIS 23°C | ISO1791eA | $kJ/m^2$ | 7.7 | 6.6 | 7.1 | 6.5 | 2.7 | 4.5 |
| NIS -20°C | ISO1791eA | $kJ/m^2$ | 3.9 | 3.0 | 3.5 | 2.8 | n.d. | 1.9 |
| HDT | ISO75B | °C | 100 | 102 | 94 | 100 | 113 | 96 |
| Shrinkage MD | *4 | % | 1.35 | 1.47 | 1.56 | 1.61 | 1.79 | n.d. |
| MPP | | - | 11535 | 10395 | 9819 | 9770 | 5686 | 6539 |

(continued)

| | | | Ex. 1 | Ex. 2 | CEx. 1 | CEx. 2 | CEx. 3 | CEx. 4 |
|---|---|---|---|---|---|---|---|---|
| MPP2 | | - | 8544 | 7071 | 6294 | 6068 | 3177 | n.d. |

*1: PPH is a polypropylene homopolymer available from Borealis AG, Austria (density: 910 kg/$m^3$, MFR 230°C/2.16 kg: 8.0 g/10 min; IV: 2.0 dl/g)
*2: Salt 1: Salt of formula (I), M=$Al^{3+}$, X=$OH^-$, n=2, m=1, o=1, both Ra the same, k=1, R=t-butyl (para)
*3: Hyperform® HPN-68L, produced by Milliken (bicyclo[2.2.1]heptane-2,3-dicarboxylic acid disodium salt)
*4: Shrinkage MD: Shrinkage in Machine direction
n.d.: not determined

As can be seen from Table 2, the inventive Examples combining a specific impact copolymer with a nucleating agent system comprising a mineral α nucleating agent as well as a salt of formula (I) provide superior properties over Comparative Examples 1 and 2 employing a two-nucleating agents system not falling under the definition of the present invention, over Comparative Examples 4 employing a single (mineral) and over Comparative Example 3 employing a nucleating agent system of inventive Example 1 (IE1) but in combination with a propylene homopolymer. The correlation between flexural modulus and NIS23 is furthermore illustrated in FIG. 1.

In particular, in addition to low MD shrinkage and high overall flexural modulus, the inventive compositions show a remarkably good balance between the mechanical and processability (mainly MFR) properties, as expressed by MPP and MPP2.

The present invention relates to a high-flow ethylene-propylene copolymer composition having improved balance of properties in regard of mechanical and impact properties. The ethylene-propylene copolymer composition has a melt flow rate MFR of more than 10 g/10 min and contains (A) 97.00-99.45 wt.-% of an ethylene-propylene impact copolymer, (B) 0.05-0.50 wt.-% of an α-nucleating agent of formula (I) of the description and (C) 0.50-2.00 wt.-% of a mineral α-nucleating agent having a median particle size of 10 μm or less. The impact copolymer comprises a1) 75-88 wt.-% of a crystalline polypropylene homopolymer fraction (CF) having an intrinsic viscosity in the range of 0.7 to 2.6 dl/g, and a2) 12-25 wt.-% of an amorphous ethylene-propylene copolymer fraction (SF) having an intrinsic viscosity in the range of 1.5 to 4.5 dl/g and an ethylene content in the range of 25.0 to 55.0 wt.-%.

## Claims

**1.** An ethylene-propylene copolymer composition comprising

A) 97.00 - 99.45 wt.-% of an ethylene-propylene impact copolymer comprising

a1) 75 - 88 wt.-%, preferably 77 - 86 wt.-%, like 79 - 85 wt.-% relative to 100 wt.-% of the ethylene-propylene impact copolymer, of a crystalline polypropylene homopolymer fraction (CF, determined by CRYSTEX QC analysis) having an intrinsic viscosity $IV_{CF}$ (according to ISO 1628/1, measured in Decalin at 135 °C) in the range of 0.7 to 2.6 dl/g, preferably 0.8 to 2.5 dl/g, like 0.9 to 2.3 dl/g, and
a2) 12 - 25 wt.-%, preferably 14 - 23 wt.-%, like 15 - 21 wt.-% relative to 100 wt.-% of the ethylene-propylene impact copolymer, of an amorphous ethylene-propylene copolymer fraction (SF, determined by CRYSTEX QC analysis) having an intrinsic viscosity $IV_{SF}$ (according to ISO 1628/1, measured in Decalin at 135 °C) in the range of 1.5 to 4.5 dl/g, preferably in the range of 1.7 to 4.0 dl/g, like in the range of 1.9 to 3.5 dl/g and an ethylene content $C2_{SF}$ (as determined by FT-IR spectroscopy calibrated by quantitative $^{13}C$-NMR spectroscopy) in the range of 25.0 to 55.0 wt.-%, preferably in the range of 30.0 to 50.0 wt.-%, like in the range of 33.0 to 47.0 wt.-%,

B) 0.05 - 0.50 wt.-%, preferably 0.08 - 0.40 wt.-%, of an α-nucleating agent selected from the group consisting of salts of formula (I) below

$$\mathbf{Ra_n\ M_m\ X_o} \quad \text{Formula (I)}$$

wherein M is independently a metal cation, X is independently an anion, Ra independently is an organic anion of the following formula (II)

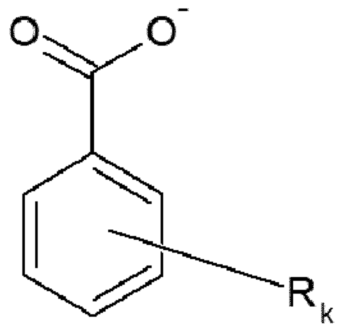

Formula (II)

wherein R is independently an aliphatic hydrocarbon group, k is independently in the range of 1 to 3, n is in the range of 1 to 4, m is 1 or 2, and o is selected so that the total charge of the salt of formula (I) is 0, and
C) 0.50 - 2.00 wt.-%, preferably 0.55 - 1.95 wt.-%, of a mineral α-nucleating agent having a median particle size D50 (according to ISO 13317-3, Sedigraph method) of less than 10 μm, preferably in the range of from 0.5 to 10.0 μm, more preferably 1.0 to 9.5 μm, like 1.5 to 9.0 μm, 2.0 to 8.5 μm, or 2.2 to 8.0 μm,
said composition having an MFR (according to ISO 1133 at 230°C and 2.16 kg load) of more than 10 g/10min, preferably 11 - 100 g/10min, like 12 - 90 g/10min.

**2.** The ethylene-propylene copolymer composition according to claim 1, wherein the mineral α-nucleating agent is talc.

**3.** The ethylene-propylene copolymer composition according to claim 1 or 2, wherein the ethylene-propylene impact copolymer has a total C2 content as determined by FT-IR spectroscopy calibrated by quantitative $^{13}$C-NMR spectroscopy in the range of from 4.2 to 11.2 wt.-%, preferably in the range of 5.0 to 10.5 wt.-%, like in the range of 5.5 to 10.0 wt.-%.

**4.** The ethylene-propylene copolymer composition according to any one of claims 1 to 3, wherein the ethylene-propylene impact copolymer has a melting temperature Tm (determined based on differential scanning calorimetry, DSC, according to ISO 11357) in the range of from 160 to 170°C, preferably in the range of 162 to 168°C.

**5.** The ethylene-propylene copolymer composition according to any one of claims 1 to 4, wherein the crystalline polypropylene homopolymer fraction (CF) has an ethylene content $C2_{CF}$ in the range of 0.3 to 2.5 wt.-%, preferably in the range of 0.5 to 2.2 wt.-%, like in the range of 0.7 to 2.0 wt.-%.

**6.** The ethylene-propylene copolymer composition according to any one of claims 1 to 5, wherein the ethylene-propylene impact copolymer has an intrinsic viscosity $IV_{EP}$ in the range of 0.8 to 3.0 dl/g, preferably in the range of 1.0 to 2.8 dl/g, like in the range of 1.2 to 2.6 dl/g.

**7.** The ethylene-propylene copolymer composition according to any one of claims 1 to 6, wherein the ratio ($IV_{SF}$ / $IV_{CF}$) between the intrinsic viscosity of the amorphous ethylene-propylene copolymer fraction (SF) and the intrinsic viscosity of the crystalline polypropylene homopolymer fraction (CF) is in the range of 0.9 to 3.5, preferably in the range of 1.0 to 3.0, like in the range of 1.1 to 2.8.

**8.** The ethylene-propylene copolymer composition according to any one of claims 1 to 7, wherein the composition has a crystallization temperature Tc (determined based on differential scanning calorimetry, DSC, according to ISO 11357) in the range of from 125 to 135°C, preferably in the range of 128 to 132°C.

**9.** The ethylene-propylene copolymer composition according to any one of claims 1 to 8, wherein the composition has one or more, preferably all of the following properties:

i. a Flexural modulus (according to ISO 178) in the range of 1400 to 1750 MPa, preferably in the range of 1450 to 1700 MPa,
ii. a NIS23 (Charpy notched impact strength according to ISO 179 1eA at 23°C) of 5.5 kJ/m$^2$ or more, preferably in the range of 6.0 to 15.0 kJ/m$^2$, like in the range of 6.5 to 12.5 kJ/m$^2$,
iii. a NIS-20°C (Charpy notched impact strength according to ISO 179 1eA at -20°C) of 2.5 kJ/m$^2$ or more, preferably in the range of 2.8 to 7.0 kJ/m$^2$, like in the range of 2.9 to 6.5 kJ/m$^2$,

iv. a heat distortion temperature (HDT; according to ISO 75 B, low load, measured on 80×10×4 $mm^3$ specimens) in the range of 95 to 115°C, preferably in the range of 97 to 112°C, like in the range of 98 to 110°C,
v. a shrinkage in the machine direction (MD shrinkage; measured as defined in the description) of 1.75% or less, preferably in the range of 0.90% to 1.70%,
vi. a Mechanical Performance Parameter MPP1, defined as the product of NIS23 (Charpy notched impact strength according to ISO 179 1eA at 23°C) [kJ/$m^2$] and Flexural modulus (according to ISO 178) [MPa], of 9900 or more, preferably in the range of from 10000 to 16000,
vii. a Mechanical Performance Parameter MPP2, defined as the product of NIS23 [kJ/$m^2$] and Flexural modulus [MPa] divided by MD Shrinkage (Shrinkage in the machine direction; as defined in the specification) [%], in the range of from 6500 to 12000, preferably in the range of 6700 to 10000,
viii. a xylene cold soluble content (XCS at 25 °C according to ISO 16152) in the range of 12 to 30 wt.-%, preferably in the range of 14 to 25 wt.-%, like in the range of 15 to 22 wt.-%,
ix. a C2 content in the xylene cold soluble fraction C2-XCS as determined by FT-IR spectroscopy calibrated by quantitative $^{13}C$-NMR spectroscopy in the range of from 30 to 50 wt.-%, preferably in the range of 32 to 47 wt.-%, like in the range of 35 to 45 wt.-%,
x. an intrinsic viscosity $IV_{EP}$ in the range of 0.8 to 3.0 dl/g, preferably in the range of 1.0 to 2.8 dl/g, like in the range of 1.2 to 2.6 dl/g

**10.** The ethylene-propylene copolymer composition according to any one of claims 1 to 9, wherein, in formula (I), M is independently an alkali metal cation, an alkaline earth metal cation, boron cation or aluminum cation, preferably an alkali metal cation or aluminum cation.

**11.** The ethylene-propylene copolymer composition according to any one of claims 1 to 10, wherein, in formula (I) and (II), m is 1 or 2, preferably 1, o is 0, 1 or 2, preferably 0 or 1, X is independently an inorganic anion, preferably a monovalent inorganic anion, more preferably selected from the group consisting of $Cl^-$, $OH^-$, $SH^-$, $HSO_3^-$, $HSO_4^-$, $NO_3^-$, $NO_2^-$ $SO_4^{2-}$, $PO_4^{3-}$, $CO_3^{2-}$, or $CN^-$, preferably $OH^-$, $SH^-$, or $NO_3^-$, more preferably $OH^-$, R is independently an aliphatic hydrocarbon group having 1 to 8 carbon atoms, preferably 2 to 6 carbon atoms, more preferably 4 to 5 carbon atoms, more preferably an acyclic (open-chain) aliphatic hydrocarbon, even more preferably a linear or branched alkyl group, preferably a branched alkyl group, more preferably selected from the group consisting of isopropyl, isobutyl, sec-butyl, tert-butyl and neopentyl, preferably tert-butyl, k is 1 or 2, preferably 1, and n is 1, 2 or 3, preferably 1 or 2, more preferably 2.

**12.** The ethylene-propylene copolymer composition according to any one of claims 1 to 11, further comprising up to 2.45 wt.-%, preferably 0.01 to 2.45 wt.-%, additive(s), said additives being preferably selected from the group consisting of antioxidants, UV-stabilizers, antistatic agents, acid scavengers, and slip agents.

**13.** The ethylene-propylene copolymer composition according to any one of claims 1 to 12, which is produced by a process comprising the steps of:

a) Polymerizing propylene in the presence of a Ziegler-Natta type catalyst system in a first polymerization reactor for producing a first propylene polymer fraction;
b) Transferring a polymerization mixture comprising the Ziegler-Natta type catalyst system and the first propylene polymer fraction from the first polymerization reactor to a second polymerization reactor;
c) Polymerizing propylene in the presence of the Ziegler-Natta type catalyst system in the second polymerization reactor for producing a second propylene polymer fraction;
d) Transferring a polymerization mixture comprising the Ziegler-Natta type catalyst system and the first and second propylene polymer fractions from the second polymerization reactor to a third polymerization reactor;
e) Polymerizing propylene and ethylene in the presence of a Ziegler-Natta type catalyst system in the third polymerization reactor for producing a third propylene-ethylene copolymer fraction;
f) Withdrawing a polymerization mixture comprising the Ziegler-Natta type catalyst system, the first and second propylene polymer fractions and the third propylene-ethylene copolymer fraction from the third polymerization reactor; and
g) Obtaining a polymer composition comprising the first and second propylene polymer fractions and the third propylene-ethylene copolymer fraction,
said process being optionally preceded by a pre-polymerization step in advance of step a.

**14.** Molded product comprising 50 to 100 wt.-% of the ethylene-propylene copolymer composition according to any one of claims 1 to 13, preferably comprising 60 to 100 wt.-%, more preferably 70 to 100 wt.-%, like 80 to 100 wt.-%, 90 to 100

wt.-%, 95 to 100 wt.-%, 98 to 100 wt.-%, or 98 to 99 wt.-% of the ethylene-propylene copolymer composition.

**15.** Use of a ethylene-propylene copolymer composition according to any one of claims 1 to 13 for preparing a molded product, like a packaging article, an automotive exterior part, an automotive interior part, or a housing for appliance or electronics, and/or for preparing an injection molded article having an average wall thickness of 2 mm or less, preferably a thin-wall packaging article, like a cup, a tray, a pail or a lid.

FIG. 1

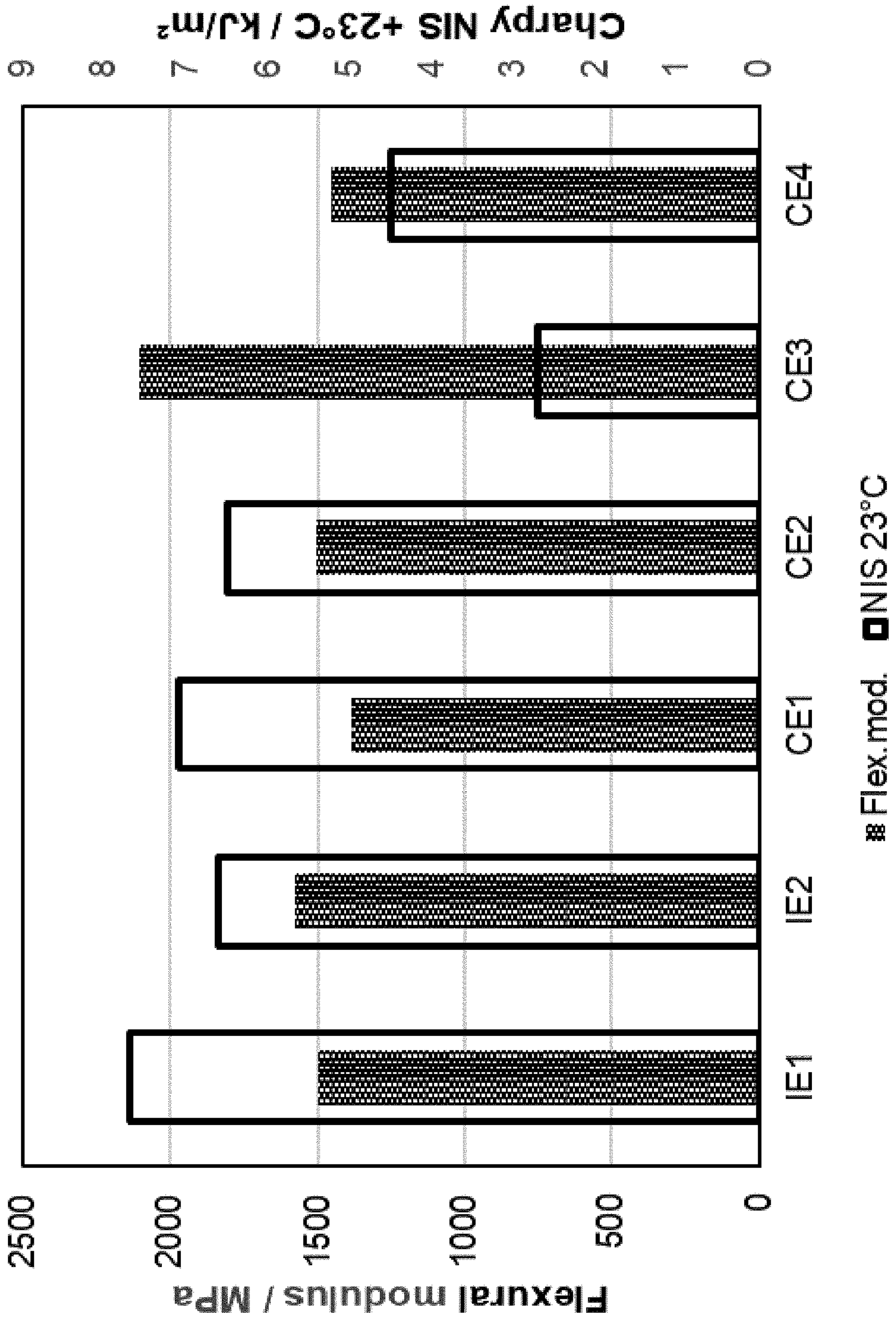
Charpy NIS +23°C / kJ/m²
9
8
7
6
5
4
3
2
1
0
Flexural modulus / MPa
2500
2000
1500
1000
500
0
IE1
IE2
CE1
CE2
CE3
CE4
Flex.mod.
NIS 23°C

Europäisches Patentamt
European Patent Office
Office européen des brevets

# EUROPEAN SEARCH REPORT

Application Number
EP 23 20 2949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 0 953 602 A1 (JAPAN POLYCHEM CORP [JP]) 3 November 1999 (1999-11-03)<br>* abstract; claim 1; example 7 *<br>* paragraphs [0064], [0065] * | 1-15<br>1-15 | INV. C08F210/16 |
| X | WO 2020/053164 A1 (ABU DHABI POLYMERS CO LTD BOROUGE [AE]; BOREALIS AG [AT]) 19 March 2020 (2020-03-19)<br>* abstract; claims 1,9 *<br>* page 13, lines 23-24 *<br>* page 25, line 7 * | 1-15 | |
| Y | WO 2017/013096 A1 (BOREALIS AG [AT]) 26 January 2017 (2017-01-26)<br>* abstract; claims 1,12; table 1 *<br>* page 9, line 25 - page 10, line 28 * | 1-15 | |
| Y | JP H07 118486 A (CHISSO CORP) 9 May 1995 (1995-05-09)<br>* abstract; claim 1; tables 2-4 *<br>* paragraphs [0013], [0022] * | 1-15 | TECHNICAL FIELDS SEARCHED (IPC) |
| Y | JP S63 146953 A (IDEMITSU PETROCHEMICAL CO) 18 June 1988 (1988-06-18)<br>* abstract; claim 1 *<br>* pages 10-11 * | 1-15 | C08F<br>C08K<br>C08L |

1 The present search report has been drawn up for all claims

| Place of search | Date of completion of the search | Examiner |
|---|---|---|
| Munich | 27 March 2024 | Schütte, Maya |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 20 2949

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2024

| Patent document cited in search report | Publication date | Patent family member(s) | Publication date |
|---|---|---|---|
| EP 0953602 A1 | 03-11-1999 | CN 1234412 A | 10-11-1999 |
| | | DE 69911684 T2 | 12-08-2004 |
| | | EP 0953602 A1 | 03-11-1999 |
| | | JP 3347289 B2 | 20-11-2002 |
| | | JP H11315186 A | 16-11-1999 |
| | | KR 19990088006 A | 27-12-1999 |
| | | TW 514654 B | 21-12-2002 |
| WO 2020053164 A1 | 19-03-2020 | AU 2019338649 A1 | 18-02-2021 |
| | | CN 112930369 A | 08-06-2021 |
| | | EP 3850042 A1 | 21-07-2021 |
| | | KR 20210065090 A | 03-06-2021 |
| | | MY 197103 A | 25-05-2023 |
| | | SG 11202101138W A | 30-03-2021 |
| | | US 2021332226 A1 | 28-10-2021 |
| | | WO 2020053164 A1 | 19-03-2020 |
| WO 2017013096 A1 | 26-01-2017 | CN 107849320 A | 27-03-2018 |
| | | EP 3325554 A1 | 30-05-2018 |
| | | ES 2804751 T3 | 09-02-2021 |
| | | WO 2017013096 A1 | 26-01-2017 |
| JP H07118486 A | 09-05-1995 | NONE | |
| JP S63146953 A | 18-06-1988 | JP H0463098 B2 | 08-10-1992 |
| | | JP S63146953 A | 18-06-1988 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0887379 A
- WO 9212182 A
- WO 2004000899 A
- WO 2004111095 A
- WO 9924478 A
- WO 9924479 A
- WO 0068315 A
- WO 2012007430 A
- EP 2610271 A
- EP 261027 A
- EP 2610272 A
- EP 4141068 A1
- WO 2017148970 A1


### Non-patent literature cited in the description


- **M. GAHLEITNER** ; **C. GREIN** ; **S. KHEIRANDISH** ; **J. WOLFSCHWENGER**. Nucleation of Polypropylene Homo- and Copolymers. *Intern.Polym.Proc.*, 2011, vol. 26, 2-20
- **LJILJANA JEREMIE** ; **ANDREAS ALBRECHT** ; **MARTINA SANDHOLZER** ; **MARKUS GAHLEITNER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- **SINGH, G.** ; **KOTHARI, A.** ; **GUPTA, V.** *Polymer Testing*, 2009, vol. 28 (5), 475
- **ZHOU, Z.** ; **KUEMMERLE, R.** ; **QIU, X** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **CHENG, H. N.** *Macromolecules*, 1984, vol. 17, 1950
- **L. RESCONI** ; **L. CAVALLO** ; **A. FAIT** ; **F. PIEMONTESI**. *Chem. Rev.*, 2000, vol. 100 (4), 1253
- **W-J. WANG** ; **S. ZHU**. *Macromolecules*, 2000, vol. 33, 1157
- **WANG, W- J.** ; **ZHU, S.** *Macromolecules*, 2000, vol. 33, 1157
- **WANG, W-J.** ; **ZHU, S.** *Macromolecules*, 2000, vol. 33, 1157
- **KAKUGO** ; **KAKUGO, M.** ; **NAITO, Y.** ; **MIZUNUMA, K.** ; **MIYATAKE, T. et al.** *Macromolecules*, 1982, vol. 15, 1150
- *CHEMICAL ABSTRACTS*, 31570-04-4